# FASCICULE DE BREVET EUROPEEN

(11) **EP 2 693 579 B1**
(45) Date de publication et mention de la délivrance du brevet: **14.01.2015**
(21) Numéro de dépôt: 13178668.3
(22) Date de dépôt: 31.07.2013
(51) Int. Cl.: H02B 1/056, H02B 1/20, H02B 1/06

(54) **Bus d'alimentation d'appareils électriques de protection de lignes**
Stromverteilungsschiene für elektrische Leitungsschutzgeräte
Bus for powering electrical line-protection apparatuses

(30) Priorité: 01.08.2012 FR 1257499
(43) Date de publication de la demande: 05.02.2014
(73) Titulaire: HAGER ELECTRO SAS, 67210 Obernai (FR)
(72) Inventeur: Poinsignon, Jean-Marc, 57220 Fouligny (FR); Berrouba, Kamel, 67530 Ottrott (FR); Gamichon, Marielle, 67530 Ottrott (FR); Lycett, Mark, Wellington Telford TF13JG Shropshire (GB); Dyson, Steve, Dawley Bank TF42GU Telford (GB); Boufennane, Khalid, 13200 Arles (FR)
(74) Mandataire: Littolff, Denis

(56) Documents cités:
- EP-A1- 1 120 873
- WO-A2-2007/066221
- DE-A1-102007 051 647
- US-A- 2 351 942

## Description

La présente invention a trait à un bus d'alimentation pour appareils électriques de protection de ligne disposés accolés en rangées dans un coffret ou une armoire de distribution d'électricité pour une installation domestique ou industrielle. Elle concerne donc un dispositif d'alimentation sur lequel il est possible de connecter l'ensemble des appareils électriques assurant la protection d'une installation électrique connectée en aval, tel que par exemple des disjoncteurs, interrupteurs ou autres produits différentiels, auxiliaires fonctionnels, etc.

Le type de bus concerné comporte une colonne de distribution, sorte d'ossature ou de colonne vertébrale du système, véhiculant des conducteurs actifs, à savoir à titre principal au moins une phase du réseau, ainsi le cas échéant que des conducteurs de transmission de données, voire dans certains cas le conducteur de neutre. La colonne de distribution est organisée de manière à ce qu'il y ait une distribution latérale issue de ces conducteurs, sur au moins un côté de la colonne, au moyen de barrettes de distribution transversales dont au moins une extrémité dépasse de la colonne dans une direction transversale d'allure perpendiculaire à l'axe de la colonne, selon une périodicité régulière dans la direction dudit axe, permettant l'ordonnancement en rangées des appareils le long de la colonne.

Les problématiques qui se posent classiquement dans le cadre de la distribution électrique réalisée par ce type de bus d'alimentation sont principalement de quatre ordres :
- garantir une sécurité maximale, en assurant une protection des utilisateurs par isolation du dispositif de manière conforme au standard IP2X ;
- assurer une stabilité des produits, c'est-à-dire des appareils électriques connectés au bus d'alimentation, et empêcher qu'une mauvaise fixation, c'est à dire mécaniquement insuffisante, ne crée de problèmes de fonctionnement électrique de l'ensemble ou ne fasse apparaître de risques pour les utilisateurs ;
- permettre un montage rapide, par exemple à l'aide de connecteurs à enfichage direct basés sur des coopérations mécaniques de type borne conductrice rigide / lamelle ressort ; et
- assurer une gestion du conducteur de neutre, voire de terre, permettant notamment de satisfaire aux conditions précédentes, sans qu'il y ait par exemple de fil de neutre déconnecté, se retrouvant à l'état pendant, certes disponible pour une connexion mais n'assurant pas de mécanisme de connexion rapide d'une part, et ne présentant pas de garantie de sécurité suffisante d'autre part.

Les dispositifs d'alimentation qui répondent à la géométrie à colonne de distribution présentée auparavant et qui existent actuellement gèrent de manière plus ou moins satisfaisante les problématiques mentionnées auparavant. Ainsi, dans nombre de cas, les appareils électriques ne tiennent pas correctement dans le tableau, pouvant le cas échéant entraîner des problèmes d'isolation. Dans certains cas, le maintien des produits attachés à la colonne de distribution ne repose d'ailleurs que sur des connexions vissées, ce qui pose le problème de la stabilité d'une part, la liaison mécanique pouvant s'avérer défectueuse, et de la lenteur, voire de la difficulté de montage d'autre part.

On constate par ailleurs dans certaines configurations des conducteurs sous forme filaire libres, potentiellement dangereux et qui imposent un raccordement par des méthodes traditionnelles non optimisées, incluant le vissage. Il est à noter que, pour de nombreux dispositifs, le fil de neutre est volant, ce qui rend à tout le moins sa connexion peu aisée.

Le document WO 2007/066221 A2 divulgue un bus d'alimentation pour appareils électriques de protection de lignes ayant les caractéristiques du préambule de la revendication 1.

La configuration de l'invention répond à ces problématiques, en mettant en oeuvre une solution originale qui permet au surplus de travailler localement et dans de bonnes conditions sur chaque appareil électrique pris individuellement, sans pour autant procéder à son démontage total. La solution de l'invention fournit par ailleurs des indicateurs et des moyens garantissant la connexion correcte du produit ou, à l'inverse, le fait que celui-ci n'est plus sous tension, bien que non démonté.

A ces effets, ainsi que dans le but de remplir d'autres fonctions qui apparaîtront dans le cours de la présente description, le bus d'alimentation de l'invention se caractérise à titre principal en ce que les appareils sont fixés individuellement sur au moins un chariot mobile coopérant avec une barrette de distribution et coulissant sur un socle s'étendant de chaque côté de distribution des barrettes transversales, le coulissement étant assuré par des moyens de guidage en translation dans la direction transversale entre deux positionnements stables correspondant à une position déconnectée et à une position connectée de l'appareil reflétant deux positionnements relatifs d'un chariot et d'une barrette transversale, et permettant respectivement le montage/démontage d'un appareil sur au moins un chariot et son raccordement à un nombre de barrettes transversales correspondant au nombre de chariots, ledit chariot comportant des moyens d'isolation de la barrette et de blocage en translation du chariot activés en position déconnectée et en l'absence d'appareil électrique sur le chariot.

L'idée qui est à la base de l'invention réside donc dans le fait que les appareils ne sont plus directement connectés à la colonne centrale, mais sont mécaniquement solidarisés à un ou plusieurs chariots coulissants prenant en charge des fonctions mécaniques de fixation d'un appareil électrique de protection tel que classiquement utilisé dans les armoires de distribution électrique, et participant à son raccordement électrique. L'idée du chariot permet par ailleurs de mettre en oeuvre de manière séquentielle la solidarisation mécanique de chaque appareil, sans prendre en compte les connexions électriques, puis dans un second temps la mise en place des connexions électriques, après coulissement du ou des chariots et dès lors que la fixation mécanique de l'appareil sur le chariot est terminée.

Cette approche séquentielle permet d'assurer et de simplifier en les dissociant chaque fonction, la première fonction de fixation mécanique et la seconde fonction de connexion électrique. Elle permet par ailleurs d'améliorer sensiblement l'aspect sécuritaire, dans la mesure où la première fixation, mécanique, s'effectue hors tension. Les chariots sont conçus de telle sorte que, lorsqu'ils sont dans leur position permettant la mise en place mécanique de chaque appareil, aucun contact n'est possible avec une pièce sous tension. Lors du coulissement en vue de la connexion électrique, l'appareil est déjà monté sur son chariot au travers duquel se fait le raccordement électrique, à nouveau sans possibilité de contact direct par l'extérieur.

Lors de l'opération inverse, en vue de déconnecter électriquement un appareil électrique, cela reste valable : à aucun moment, il n'y a de possibilité de contact électrique avec une pièce sous tension. Mais lorsqu'on passe de la position connectée à la position déconnectée, qui seule le permet, le démontage d'un appareil s'effectue dès lors hors tension.

L'ensemble du dispositif de l'invention, y compris les chariots, a été conçu de telle sorte que les liaisons mécaniques soient robustes, et qu'elles permettent de travailler rapidement grâce à des liaisons / guidages conçus pour être immédiats et rapides d'utilisation.

En pratique, selon une possibilité, une portion surélevée du socle constitue la colonne de distribution du bus qui comporte en outre :
- une ou plusieurs barres axiales véhiculant la ou les phases,
- les barrettes de distribution transversales les distribuant latéralement et
- un couvercle doté sur au moins un côté de protubérances crénelées de guidage des chariots et dont dépassent les barrettes transversales.

En fait, plus précisément, les chariots sont accolés et de largeur, dans la direction de l'axe de la colonne centrale, égale à la distance entre les axes médians de deux barrettes adjacentes.

Une telle configuration permet de gérer au mieux l'espace disponible dans la mesure où les appareils sont alors également accolés, par des grandes faces latérales de leur boîtier. Dans le cas d'utilisation d'appareils modulaires standards, les chariots présentent ladite largeur standard, dite largeur modulaire.

Selon une configuration possible, le chariot comporte, dans un promontoire d'extrémité s'interposant entre l'appareil et la colonne de distribution, à hauteur des barrettes transversales, une ouverture permettant le passage d'une extrémité d'une barrette, laquelle est maintenue dans le volume du promontoire en position déconnectée et dépasse de l'ouverture en position connectée, et des moyens d'obturation de ladite ouverture empêchant, lorsqu'ils sont activés, le contact avec ladite extrémité en position déconnectée ainsi que le coulissement libre du chariot vers la position connectée.

En d'autres termes, lorsque les chariots sont en position déconnectée, les barrettes ne sont pas accessibles à un contact, et sont invisibles. Elles ne pourraient être visibles qu'en position connectée, mais dans ce cas, l'existence d'un appareil sur le chariot entraîne que la barrette vient se connecter à l'intérieur du boîtier dudit appareil, et n'est donc pas plus accessible.

Il est à noter que les moyens d'obturation, assurant l'isolation IP2X en position déconnectée, empêchent de faire coulisser le chariot vers sa position connectée sans recourir à une manoeuvre manuelle spécifique et donc voulue. Cela renforce encore la sécurité résultant de l'existence de ce chariot.

Plus précisément, selon une possibilité propre à l'invention, les moyens d'obturation du passage consistent en un loquet de type guillotine mobile dans une direction perpendiculaire à la direction de déplacement du chariot, dont une extrémité d'actionnement dépasse du chariot lorsque le loquet est dans une position de repos stable, ledit loquet étant mobile à l'encontre de moyens de rappel et comportant une fente se plaçant dans l'alignement de la barrette transversale et de l'ouverture en vue de permettre le passage de ladite barrette lorsque l'extrémité d'actionnement est actionnée, ladite fente étant décalée de l'ouverture et obturant le passage en position de repos.

En l'absence de sollicitation, en position déconnectée du chariot, le loquet obture le passage.

Pour améliorer le positionnement des appareils électriques sur les chariots, des équerres peuvent être placées au pied du promontoire d'extrémité, entre ce dernier et une semelle du chariot, au niveau des bordures latérales de ladite semelle. Elles empêchent d'une part un débattement latéral des appareils sur leur chariot, et d'autre part une mauvaise connexion des appareils, à cheval entre deux chariots, c'est-à-dire simultanément à deux barrettes transversales adjacentes.

Enfin, selon une configuration possible, l'extrémité accessible d'actionnement du loquet comprend un orifice pour le passage d'un cadenas, permettant une consignation des appareils électriques.

On a évoqué précédemment le problème que constitue la gestion du neutre. Selon une possibilité, le bus d'alimentation de l'invention peut comporter, sur chaque côté existant de distribution par les barrettes transversales, une barre de neutre fixée au socle et comportant des lamelles de connexion orientées dans la direction de translation du chariot, une lamelle sous chaque chariot, et de longueur prévue pour les rendre accessibles en position connectée des chariots.

En substance, le bus de l'invention rend le neutre disponible, qu'il soit ou non utilisé, pour tout appareil électrique fixé sur un chariot.

Ces lamelles sont de préférence prévues, à la fois dans leur orientation et leur longueur, pour coopérer avec les chariots en respectant les mêmes objectifs que les barrettes transversales de distribution, c'est-à-dire une inaccessibilité lorsque le chariot est en position déconnectée, et une accessibilité électrique dans l'hypothèse inverse.

En fait, selon une configuration possible, chaque barre de neutre est disposée dans une rainure pratiquée dans le socle selon une orientation d'allure parallèle à la colonne de distribution, au moins une portion des lamelles s'étendant au-dessus et parallèlement au socle.

Chaque barre de neutre comporte en réalité une tige ou barre axiale qui se développe le long de la colonne de distribution, dans ladite rainure pratiquée dans le socle, et des lamelles coudées à intervalle régulier de sorte que les extrémités libres des lamelles soient parallèles au socle et positionnées de manière prédéterminée par rapport au socle sur lequel viennent coulisser les chariots, qui sont configurés pour tenir compte de ces lamelles.

Chaque chariot comporte en pratique une semelle dotée d'au moins un évidement longitudinal apte à s'ajuster sur au moins un relief dépassant du socle, lequel constitue un rail de guidage en translation de ladite semelle. Il s'agit bien d'une sorte de rail sur lequel s'ajuste la semelle, qui peut alors y coulisser en y étant guidé, un seul degré de liberté lui étant accordé.

Une portion terminale de lamelle de la barre de neutre s'étendant au dessus du socle est logée entre d'une part le fond de l'évidement de la semelle et d'autre part un support dépassant du socle, ladite portion terminale de lamelle restant sous la semelle en position déconnectée et sortant de la semelle en position connectée.

Pour synthétiser, chaque chariot, lorsqu'il est en position déconnectée, ne laisse apparaître aucun élément du circuit électrique.

Selon une possibilité, ladite portion terminale de chaque lamelle comporte un revêtement isolant de longueur supérieure à ladite portion, apte à coulisser le long de la lamelle sur une distance au moins égale à ladite portion terminale en vue de dénuder l'extrémité libre de la lamelle dépassant du chariot en sa position connectée, une collerette équipant l'extrémité du revêtement isolant distale de ladite extrémité libre étant entraînée, pour que le revêtement recouvre la portion terminale lorsque la lamelle a été dénudée, par un muret dépassant du fond de l'évidement de la semelle et exerçant une action sur la collerette lorsque le chariot est déplacé vers sa position déconnectée.

Si le chariot sans appareil est déplacé dans sa position de connexion, la portion terminale de la lamelle apparaît, recouverte de son revêtement isolant. Certains appareils sont dotés d'une excroissance d'allure prismatique, ou « sucre » de raccordement au neutre qui dépasse de leur semelle et du chariot, qui vient repousser le revêtement isolant lorsque le chariot est déplacé vers sa position de connexion, réalisant la connexion simultanée au neutre pour ce type d'appareil. Il faut cependant « réinitialiser » la position du revêtement isolant au cours du déplacement inverse, ce qui est réalisé par le muret précité.

Au surplus, selon l'invention, le support de la lamelle peut comporter un relief formant point dur suivi d'une butée d'extrémité, entre lesquels se positionne la collerette lorsque le chariot est en fin du trajet vers sa position déconnectée. Le point dur fait office d'organe haptique d'acquittement signalant que la « réinitialisation » a bien été effectuée, c'est-à-dire que le revêtement isolant recouvre à nouveau la portion terminale de la lamelle.

Selon une disposition particulière de l'invention, la partie centrale de chaque semelle de chariot, sur sa face opposée à l'évidement, présente un profilé reprenant la forme d'un rail normalisé de fixation d'appareils électriques à deux parois d'allure perpendiculaire à la semelle surmontées de deux rebords s'évasant vers l'extérieur dans une direction sensiblement parallèle à ladite semelle.

En principe, de tels profilés sont normalisés, ce qui implique que les distances entre d'une part les parois et d'autre part les extrémités libres des rebords sont fixées.

En l'occurrence, la distance entre lesdites parois du profilé est augmentée par rapport aux profilés normalisés de manière à éviter tout débattement angulaire des appareils lorsqu'ils y sont fixés et de sorte que, côté promontoire, la distance entre les extrémités libres des rebords restant la distance normalisée, le dépassement du rebord par rapport à la paroi soit réduit. Son extrémité est par ailleurs arrondie, pour que la fixation sur le profilé d'un loquet coulissant sur la semelle des appareils électriques modulaires à l'encontre de moyens de rappel permette le démontage de l'appareil modulaire par pivotement de ce dernier autour de l'extrémité opposée du profilé.

En fait, le but de cette adaptation du profilé est double :
- maximaliser la distance entre parois pour s'approcher le plus possible de l'écartement entre l'extrémité du loquet coulissant et la pointe qui lui fait face dans la partie centrale de la semelle d'un appareil modulaire prévue pour se fixer sur un rail, pour supprimer tout débattement angulaire comme mentionné auparavant ;
- faciliter le détachement du produit modulaire par l'arrondissement de l'extrémité du profilé opposée à celle qui fait office d'axe de pivotement lorsqu'on démonte ledit produit.

L'avantage de cette configuration est qu'il sera dès lors possible de réutiliser, avec un bus d'alimentation selon l'invention, des appareils modulaires utilisés jusqu'ici dans d'autres configurations, c'est-à-dire simplement fixés sur un rail de type DIN équipant d'autres types de coffrets d'alimentation.

Dans cette optique, et pour permettre une connexion telle que traditionnellement utilisée notamment dans les systèmes à barre de pontage employés dans le type de coffret qui vient d'être mentionné, les extrémités de chaque barrette de distribution transversale peuvent être prévues en forme de fourche.

Les nervures en forme d'équerre garantissant le bon positionnement de l'appareil modulaire sur le chariot, dont on a mentionné auparavant l'existence, sont en fait disposés entre le profilé reprenant la forme d'un rail normalisé et le promontoire d'extrémité de chaque chariot. Elles empêchent qu'un appareil électrique chevauche deux chariots adjacents et se connecte à deux branches adjacentes de deux fourches distinctes.

Il est à noter que la distance entre les extrémités des barrettes de distribution transversales et les connecteurs d'entrée des appareils électriques placés sur les chariots est supérieure à 4 mm en position déconnectée des chariots, de sorte que le bus d'alimentation de l'invention peut fonctionner en sectionneur, car obéissant aux contraintes de distance normées entre conducteurs.

L'invention va à présent être décrite plus en détail, en référence aux figures annexées, pour lesquelles :
- la figure 1 représente un bus d'alimentation selon la présente invention, dans une version où la colonne de distribution est centrale, et comporte deux jeux de chariots latéraux ;
- la figure 2 montre, en vue du dessus, le bus d'alimentation de la figure 1 ;
- la figure 3 en présente une vue de côté en légère perspective, et
- la figure 4 illustre la conception d'un chariot selon la présente invention, en vue perspective en montrant les évidements notamment utilisés pour le guidage en translation.

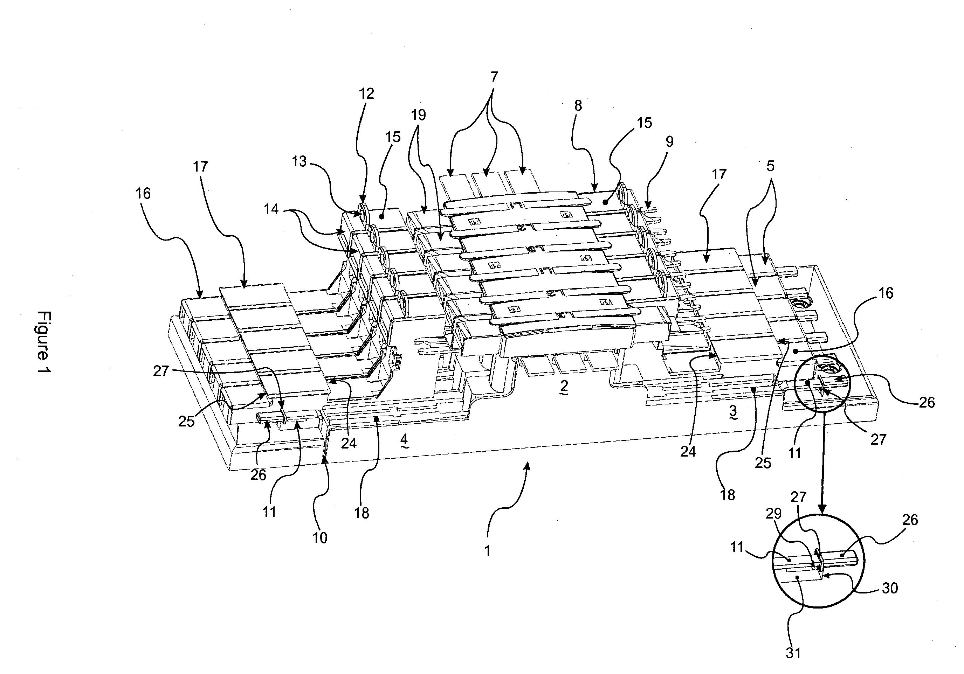

En référence à la figure 1, le bus de distribution de l'invention comporte un socle (1) présentant une partie centrale surélevée (2) et deux portions latérales (3) et (4) sur lesquelles sont disposés des chariots coulissants (5). La partie centrale surélevée (2) du socle (1) supporte des barres conductrices (7), véhiculant en l'occurrence les trois phases, surmontées par un couvercle (8) et auxquelles sont solidarisées des barrettes de distribution (9) transversalesÒ à extrémité fourchue. L'ensemble constitué par la partie centrale surélevée (2) du socle (1), les barres véhiculant les phases (7), le couvercle (8) et les barrettes transversales (9) constituent la colonne de distribution, en l'occurrence disposée centralement dans une configuration symétrique de bus.

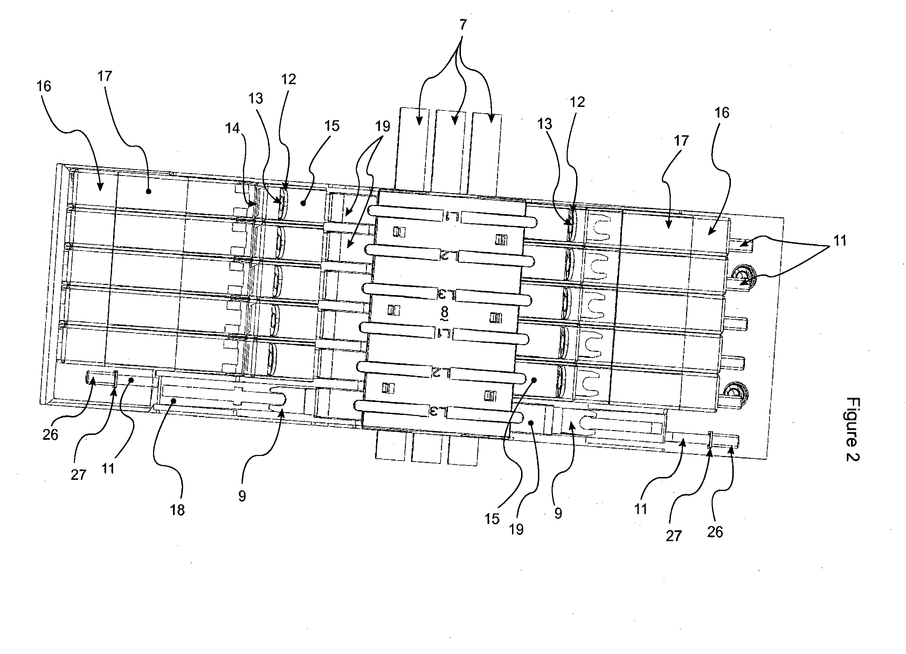

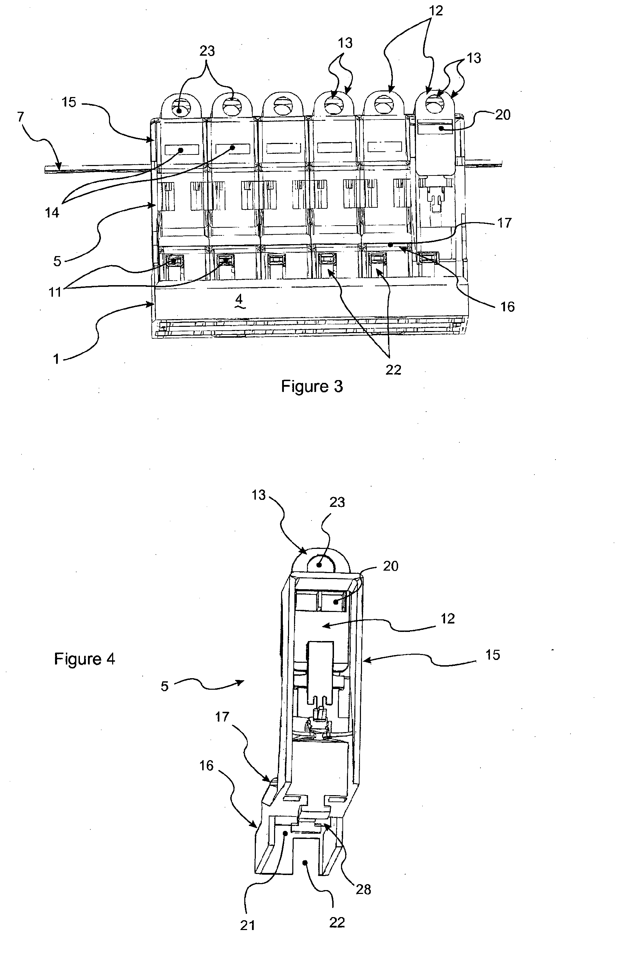

Les chariots (5), dont un exemple est représenté en figure 4, apparaissent dans les figures 1 et 2 respectivement en position déconnectée en partie gauche de la figure et en position connectée en partie droite de la figure. Pour permettre d'apprécier le positionnement relatif notamment des chariots (5) et de l'extrémité des barrettes transversales (9), les deux chariots situés au premier plan ont été enlevés. Dans une configuration triphasée telle qu'elle est montrée dans les figures, les barrettes transversales (9) distribuent de manière régulière et périodique les trois phases. Le socle (1) comporte par ailleurs des rainures symétriques (10) orientées selon l'axe de distribution, c'est-à-dire l'axe longitudinal des barres (7) véhiculant les phases. Les rainures (10) logent chacune une barre de neutre auxquelles sont rapportées des lamelles coudées (11) selon une périodicité spatiale régulière qui correspond à celle des barrettes transversales (9).

Dans la position déconnectée, apparaissant en partie gauche des figures 1 et 2, et qui est également celle qui est représentée en figure 3, laquelle est par conséquent une vue de côté gauche, les extrémités fourchues des barrettes transversales (9) ainsi que les lamelles coudées de la barre du neutre ne sont pas apparentes, mais demeurent à l'intérieur du chariot (5). Les moyens d'obturation (12), en l'espèce des loquets de type guillotine actionnables manuellement par exemple via une extrémité (13) dotée d'un orifice (23) de cadenassage, permettent d'une part d'assurer la protection IP2X en empêchant tout contact avec les barrettes transversales (9) électriquement reliées aux barres (7), et d'autre part de réaliser un acquittement du positionnement correct du chariot en mode connecté lorsque ledit chariot (5) est complètement coulissé vers la colonne de distribution centrale.

Dans cette hypothèse, qui apparaît en partie droite des figures 1 et 2, les extrémités fourchues des barrettes transversales (9) sont accessibles, ayant franchi l'ouverture (14) prévu à leur niveau dans un promontoire d'extrémité (15) du chariot (5) surplombant les semelles (16) de ce dernier et prévu pour s'interposer entre la colonne de distribution et les appareils électriques de protection à fixer sur les chariots (5). Ladite semelle (16) comporte, dans sa portion centrale, un profilé (17) s'apparentant aux rails DIN sur lesquels les appareils électriques de protection sont fixés dans certaines armoires de distribution. Un arrondi (24) à l'une des extrémités du profilé (17) (voir en figure 1) maintient le loquet grande course équipant les appareils à installer sur les chariots (5), mais la longueur entre les parois dudit profilé (17) est prévue telle que lesdits appareils peuvent être démontés par rotation autour de l'extrémité opposée (25) du profilé (17), comme cela a été expliqué auparavant. Cette caractéristique est nécessaire pour la démontabilité, car l'utilisateur n'a pas accès audit loquet lorsque l'appareil est fixé sur un chariot (5).

Pour passer de la position déconnectée apparaissant en partie gauche des figures à la position connectée de la partie droite, chaque chariot (5) coulisse sur un rail (18) sur une longueur lui permettant d'arriver en butée contre la colonne de distribution centrale, la semelle (16) étant guidée par ledit rail (18), alors que la partie supérieure du promontoire (15) est guidée par correspondance de forme au contact de protubérances (19) crénelées d'allure prismatique dépassant latéralement du couvercle (8) de la colonne centrale de distribution, d'où émergent les extrémités fourchues des barrettes latérales (9).

En référence à la figure 3, les ouvertures (14) sont obturées par les moyens d'obturation (12), qui sont en l'occurrence constitués d'un loquet muni en partie supérieure d'une extrémité d'actionnement (13) permettant son actionnement manuel à l'encontre d'un ressort à boudin (non représenté), et qui présente une fente (20) calibrée pour permettre le passage des extrémités fourchues des barrettes transversales (9) lorsqu'elle est alignée avec l'ouverture (14). Dans la configuration représentée en figure 3, la fente (20) est placée de sorte à obturer l'ouverture (14), dont on voit qu'elle n'est pas située au même niveau qu'elle. Il convient par conséquent que l'utilisateur exerce une pression sur la partie supérieure de l'obturateur (12) à l'encontre du ressort, afin de le faire descendre en vue de faire coïncider la fente (20) et le passage (14). Dans ce cas, les chariots (5) sont coulissables sur les rails (18) et, guidés par les protubérances crénelées (19), peuvent être déplacés vers la colonne centrale de distribution.

La figure 4 montre également la coopération entre le loquet de l'obturateur (12) et le chariot (5), l'obturateur (12) se situant à nouveau dans sa position de repos obturant le passage créé par l'ouverture (14) (non visible). Le chariot (5) comporte essentiellement deux volumes creux orientés sensiblement perpendiculairement l'un à l'autre, un premier volume étant constitué dans le promontoire d'extrémité (15), permettant le guidage au contact des protubérances (19) qui s'ajustent dans la partie supérieure du volume creux délimité par les parois latérales et supérieure dudit promontoire d'extrémité (15). Un second volume ou évidement creux (21) est situé sous la semelle (16), et s'ajuste par adaptation de forme aux rails (18) prévus dans le socle (1), rails (18) sur lesquels le chariot (5) peut alors coulisser. L'évidement (21) est fermé, à son extrémité, par une cloison dans laquelle est pratiqué un orifice (22) pour le passage de la lamelle coudée (11) issue de la barre de neutre (10).

La portion terminale de ces lamelles (11) est revêtue d'un isolant (26) se terminant par une collerette (27) tels qu'en position connectée apparaissant par exemple à droite des figures 1 et 2, ladite portion dépasse des chariots (5) uniquement par sa portion isolée. Elle n'apparaît pas dans la position déconnectée du chariot (5), visible en partie gauche de ces mêmes figures 1 et 2.

Ledit revêtement isolant (26) est coulissable, par exemple entrainé par un « sucre » dépassant de certains appareils et réalisant la connexion au neutre, le faisant coulisser à mesure que l'on déplace le chariot (5) vers sa position connectée. Dans le déplacement inverse, un muret (28) dépassant du fond de l'évidement (21) repousse le revêtement isolant (26) vers sa position d'extrémité telle que représentée, et atteinte lorsque la collerette (27) franchit un point dur (29) et atteint une butée (30) du support (31) (voir en figure 1, détail agrandi). La position de l'isolant (26) se trouve dès lors réinitialisée.

## Revendications

1. Bus d'alimentation pour appareils électriques de protection de lignes disposés accolés en rangées dans un coffret ou une armoire de distribution d'installation domestique ou industrielle, comportant une colonne de distribution véhiculant des conducteurs actifs (7) dont au moins une phase du réseau, lesquels sont distribués latéralement sur au moins un côté par des barrettes de distribution (9) transversales dont au moins une extrémité dépasse de la colonne de distribution dans une direction transversale d'allure perpendiculaire à l'axe de la colonne, selon une périodicité régulière dans la direction dudit axe, les appareils étant fixés individuellement sur au moins un chariot mobile (5) coopérant avec une barrette de distribution (9) et coulissant sur un socle (1) s'étendant de chaque côté de distribution des barrettes transversales (9), le coulissement étant assuré par des moyens de guidage en translation dans la direction transversale entre deux positionnements stables correspondant à une position déconnectée et à une position connectée de l'appareil reflétant deux positionnements relatifs d'un chariot (5) et d'une barrette transversale (9), permettant respectivement le montage/démontage d'un appareil sur au moins un chariot (5) et son raccordement à un nombre de barrettes transversales (9) correspondant au nombre de chariots, **caracterisé en ce que** ledit chariot (5) comporte des moyens d'isolation de la barrette (9) et de blocage en translation du chariot (5) activés en position déconnectée et en l'absence d'appareil électrique sur le chariot (5).

2. Bus d'alimentation pour appareils électriques de protection de lignes selon la revendication précédente, **caractérisé en ce qu'**une portion surélevée (2) du socle (1) constitue la colonne de distribution du bus qui comporte en outre :
- une ou plusieurs barres axiales (7) véhiculant la ou les phases,
- les barrettes de distribution transversales (9) les distribuant latéralement et
- un couvercle (8) doté sur au moins un côté de protubérances (19) crénelées de guidage des chariots (5) et dont dépassent les barrettes transversales (9).

3. Bus d'alimentation pour appareils électriques de protection de lignes selon l'une des revendications précédentes, **caractérisé en ce que** les chariots (5) sont accolés et de largeur, dans la direction de l'axe de la colonne centrale, égale à la distance entre les axes médians de deux barrettes (9) adjacentes.

4. Bus d'alimentation pour appareils électrique de protection de lignes selon la revendication précédente, **caractérisé en ce que** le chariot (5) comporte, dans un promontoire d'extrémité (15) s'interposant entre l'appareil et la colonne de distribution, à hauteur des barrettes transversales (9), une ouverture (14) permettant le passage d'une extrémité d'une barrette (9), laquelle est maintenue dans le volume du promontoire (15) en position déconnectée et dépasse de l'ouverture (14) en position connectée, et des moyens d'obturation (12) de ladite ouverture (14) empêchant, lorsqu'ils sont activés, le contact avec ladite extrémité en position déconnectée ainsi que le coulissement libre du chariot (5) vers la position connectée.

5. Bus d'alimentation pour appareils électriques de protection de lignes selon la revendication précédente, **caractérisé en ce que** des équerres sont placées au pied du promontoire d'extrémité (15) entre ce dernier et une semelle (16) du chariot (5), au niveau des bordures latérales de ladite semelle (16).

6. Bus d'alimentation pour appareils électriques de protection de lignes selon l'une des revendications 4 et 5, **caractérisé en ce que** les moyens d'obturation (12) du passage consistent en un loquet de type guillotine mobile dans une direction perpendiculaire à la direction de déplacement du chariot (5), dont une extrémité d'actionnement dépasse du chariot (5) lorsque le loquet (12) est dans une position de repos stable, ledit loquet (12) étant mobile à l'encontre de moyens de rappel et comportant une fente (20) se plaçant dans l'alignement de la barrette transversale (9) et de l'ouverture (14) en vue de permettre le passage de ladite barrette (9) lorsque l'extrémité d'actionnement est actionnée, ladite fente (20) étant décalée de l'ouverture (14) et obturant le passage en position de repos.

7. Bus d'alimentation pour appareils électrique de protection de lignes selon la revendication précédente, **caractérisé en ce que** l'extrémité d'actionnement comprend un orifice (21) pour le passage d'un cadenas.

8. Bus d'alimentation pour appareils électriques de protection de lignes selon l'une des revendications précédentes, **caractérisé en ce qu'**il comporte, sur chaque côté existant de distribution par les barrettes transversales (9), une barre de neutre fixée au socle (1) et comportant des lamelles (11) de connexion orientées dans la direction de translation du chariot (5), une lamelle (11) sous chaque chariot, et de longueur prévue pour les rendre accessibles en position connectée des chariots (5).

9. Bus d'alimentation pour appareils électriques de protection de lignes selon la revendication précédente, **caractérisé en ce que** chaque barre de neutre est disposée dans une rainure (10) pratiquée dans le socle (1) selon une orientation d'allure parallèle à la colonne de distribution, au moins une portion des lamelles (11) s'étendant au-dessus et parallèlement au socle (1).

10. Bus d'alimentation pour appareils électrique de protection de lignes selon l'une des revendications précédentes, **caractérisé en ce que** chaque chariot (5) comporte une semelle (16) dotée d'au moins un évidemment (21) longitudinal apte à s'ajuster sur au moins un relief (18) dépassant du socle, lequel constitue un rail de guidage en translation de ladite semelle (16).

11. Bus d'alimentation pour appareils électriques de protection de lignes selon la revendication précédente, **caractérisé en ce qu'**une portion terminale de lamelle (11) de la barre de neutre s'étendant au dessus du socle (1) est logée entre d'une part le fond de l'évidemment (21) de la semelle (16) et d'autre part un support (31) dépassant du socle (1), ladite portion terminale de lamelle (11) restant sous la semelle en position déconnectée et sortant de la semelle (16) en position connectée.

12. Bus d'alimentation pour appareils électriques de protection de lignes selon la revendication précédente, **caractérisé en ce que** ladite portion terminale de chaque lamelle (11) comporte un revêtement isolant (26) de longueur supérieure à ladite portion, apte à coulisser le long de la lamelle (11) sur une distance au moins égale à ladite portion terminale en vue de dénuder l'extrémité libre de la lamelle (11) dépassant du chariot (5) en sa position connectée, une collerette (27) équipant l'extrémité du revêtement isolant (26) distale de ladite extrémité libre étant entraînée, pour que le revêtement (26) recouvre la portion terminale lorsque la lamelle (11) a été dénudée, par un muret (28) dépassant du fond de l'évidemment (21) de la semelle (16) et exerçant une action sur la collerette (27) lorsque le chariot (5) est déplacé vers sa position déconnectée.

13. Bus d'alimentation pour appareils électriques de protection de lignes selon la revendication précédente, **caractérisé en ce que** le support (31) de la lamelle (11) comporte un relief formant point dur (29) suivi d'une butée (30) d'extrémité, entre lesquels se positionne la collerette (27) lorsque le chariot (5) est en fin du trajet vers sa position déconnectée.

14. Bus d'alimentation pour appareils électriques de protection de lignes selon l'une des revendications précédentes, **caractérisé en ce que** la partie centrale de chaque semelle (16) de chariot (5), sur sa face opposée à l'évidemment (21), présente un profilé (17) reprenant la forme d'un rail normalisé de fixation d'appareils électriques, à deux parois d'allure perpendiculaire à la semelle (16) surmontées de deux rebords (24, 25) s'évasant vers l'extérieur dans une direction sensiblement parallèle à ladite semelle (16).

15. Bus d'alimentation pour appareils électriques de protection de lignes selon la revendication précédente, **caractérisé en ce que** la distance entre lesdites parois du profilé (17) est augmentée par rapport aux profilés normalisés de manière à éviter tout débattement angulaire des appareils lorsqu'ils y sont fixés et de sorte que, côté promontoire (15), la distance entre les extrémités libres (24, 25) des rebords restant la distance normalisée, le dépassement du rebord (24) par rapport à la paroi soit réduit et son extrémité arrondie, pour que la fixation sur le profilé (17) d'un loquet coulissant sur la semelle des appareils électriques modulaires à l'encontre de moyens de rappel permette le démontage de l'appareil modulaire par pivotement de ce dernier autour de l'extrémité opposée (25) du profilé (17).

16. Bus d'alimentation pour appareils électrique de protection de lignes selon l'une des revendications précédentes, **caractérisé en ce que** les extrémités de chaque barrette de distribution (9) transversale sont en forme de fourche.

17. Bus d'alimentation pour appareils électriques de protection de lignes selon l'une des revendications précédentes, **caractérisé en ce que** la distance entre les extrémités des barrettes transversales (9) et les connecteurs d'entrée des appareils électriques placés sur les chariots (5) est supérieure à 4 mm en position déconnectée des chariots (5).

## Patentansprüche

1. Stromverteilungsschiene für elektrische Leitungsschutzgeräte, die aneinander aufgereiht in einem Verteilerkasten oder -schrank einer Haus- oder Industrieanlage angeordnet sind, die eine Verteilersäule aufweist, die aktive Leiter (7) führt, darunter mindestens eine Netzphase, die seitlich auf mindestens einer Seite anhand transversaler Verteilerschienen (9) verteilt sind, von denen mindestens ein Ende über die Verteilersäule in einer transversalen Richtung lotrecht zur Achse der Säule gemäß einer regelmäßigen Periodizität in Richtung der Achse hinausragt, wobei die Geräte individuell auf mindestens einem beweglichen Schlitten (5) befestigt sind, der mit einer Verteilerschiene (9) zusammenarbeitet und auf einem Sockel (1) gleitet, der sich auf jeder Seite der Verteilung der transversalen Schienen (9) erstreckt, wobei das Gleiten von Führungsmitteln sichergestellt ist, die sich in der transversalen Richtung zwischen zwei stabilen Positionen verlagern, die einer gelösten Position und einer verbundenen Position des Geräts entsprechen, die zwei relative Positionierungen eines Schlittens (5) und einer transversalen Schiene (9) widerspiegeln, die jeweils die Montage/Demontage eines Geräts auf mindestens einem Schlitten (5) und seine Verbindung mit einer Anzahl transversaler Schienen (9) erlaubt, die der Schlittenanzahl entspricht, **dadurch gekennzeichnet, dass** der Schlitten (5) Isolationsmittel der Schiene (9) und zur Blockade der Verschiebung des Schlittens (5) aufweist, die in gelöster Position und in Abwesenheit eines elektrischen Geräts auf dem Schlitten (5) aktiviert sind.

2. Stromverteilungsschiene für elektrische Leitungsschutzgeräte nach vorangehendem Anspruch, **dadurch gekennzeichnet, dass** ein erhöhter Abschnitt (2) des Sockels (1) die Verteilersäule der Stromverteilungsschiene bildet, die ferner umfasst:
- einen oder mehrere axiale Stäbe (7), die die Phase(n) führen,
- die transversalen Verteilerschienen (9), die sie seitlich verteilt, und
- einen Deckel (8), der auf mindestens einer Seite mit gezackten Führungsvorsprüngen (19) der Schlitten (5) ausgestattet ist, über die die transversalen Schienen (9) hinausreichen.

3. Stromverteilungsschiene für elektrische Leitungsschutzgeräte nach einem der vorangehenden Ansprüche, **dadurch gekennzeichnet, dass** die Schlitten (5) aneinandergereiht sind und in der Breite in Richtung der Achse der zentralen Säule gleich dem Abstand zwischen den mittleren Achsen von zwei benachbarten Schienen (9) sind.

4. Stromverteilungsschiene für elektrische Leitungsschutzgeräte nach vorangehendem Anspruch, **dadurch gekennzeichnet, dass** der Schlitten (5) in einem Endvorsprung (15) zwischen dem Gerät und der Verteilersäule in Höhe der transversalen Schienen (9) eine Öffnung (14) aufweist, die den Durchgang eines Endes einer Schiene (9) erlaubt, das im Volumen des Vorsprungs (15) in gelöster Position gehalten wird und in verbundener Position über die Öffnung (14) hinausreicht, und Verschlussmittel (12) der Öffnung (14), die, wenn sie aktiviert sind, den Kontakt mit dem Ende in gelöster Position sowie das freie Gleiten des Schlittens (5) in die verbundene Position verhindern.

5. Stromverteilungsschiene für elektrische Leitungsschutzgeräte nach vorangehendem Anspruch, **dadurch gekennzeichnet, dass** am Fuß des Endvorsprungs (15) zwischen diesem und einer Sohle (16) des Schlittens (5) auf Ebene der Seitenränder der Sohle (16) Winkel platziert sind.

6. Stromverteilungsschiene für elektrische Leitungsschutzgeräte nach einem der Ansprüche 4 und 5, **dadurch gekennzeichnet, dass** die Verschlussmittel (12) des Durchgangs aus einem Riegel vom Typ Guillotine bestehen, die in einer lotrechten Richtung zur Verlagerungsrichtung des Schlittens (5) bewegbar sind, von denen ein Betätigungsende über den Schlitten (5) hinausragt, wenn der Riegel (12) in einer stabilen Ruhestellung ist, wobei der Riegel (12) gegen Rückholmittel bewegbar ist und einen Schlitz (20) aufweist, der sich in die Flucht der transversalen Schiene (9) und der Öffnung (14) platziert, um den Durchgang der Schiene (9) zu ermöglichen, wenn das Betätigungsende betätigt wird, wobei der Schlitz (20) von der Öffnung (14) versetzt ist und den Durchgang in Ruhestellung verschließt.

7. Stromverteilungsschiene für elektrische Leitungsschutzgeräte nach vorangehendem Anspruch, **dadurch gekennzeichnet, dass** das Betätigungsende eine Öffnung (21) für den Durchgang eines Schlosses umfasst.

8. Stromverteilungsschiene für elektrische Leitungsschutzgeräte nach einem der vorangehenden Ansprüche, **dadurch gekennzeichnet, dass** sie auf jeder vorhandenen Seite der Verteilung durch die transversalen Schienen (9) eine Nullschiene aufweist, die am Sockel (1) befestigt ist und Verbindungslamellen (11) aufweist, die in die Verlagerungsrichtung des Schlittens (5) zeigen, mit einer Lamelle (11) unter jedem Schlitten in entsprechender Länge, damit sie in der verbundenen Position der Schlitten (5) erreichbar sind.

9. Stromverteilungsschiene für elektrische Leitungsschutzgeräte nach vorangehendem Anspruch, **dadurch gekennzeichnet, dass** jede Nullschiene in einer in den Sockel (1) gemäß einer parallelen Richtung zur Verteilersäule eingearbeiteten Rille (10) angeordnet ist, wobei sich mindestens ein Abschnitt der Lamellen (11) über dem und parallel zum Sockel (1) erstreckt.

10. Stromverteilungsschiene für elektrische Leitungsschutzgeräte nach einem der vorangehenden Ansprüche, **dadurch gekennzeichnet, dass** jeder Schlitten (5) eine Sohle (16) aufweist, die mit mindestens einer Längsaussparung (21) versehen ist, die imstande ist, sich mindestens an einem Relief (18), das über den Sockel hinausreicht, anzurichten, das eine Führungsschiene für die Verlagerung der Sohle (16) darstellt.

11. Stromverteilungsschiene für elektrische Leitungsschutzgeräte nach vorangehendem Anspruch, **dadurch gekennzeichnet, dass** ein terminaler Abschnitt der Lamelle (11) der Nullschiene, das sich über dem Sockel (1) erstreckt, zwischen einerseits dem Boden der Aussparung (21) der Sohle (16) und andererseits einer Stütze (31), die über den Sockel (1) hinausreicht, untergebracht ist, wobei der terminale Abschnitt der Lamelle (11) in gelöster Position unter der Sohle verbleibt und in verbundener Position aus der Sohle (16) hervortritt.

12. Stromverteilungsschiene für elektrische Leitungsschutzgeräte nach vorangehendem Anspruch, **dadurch gekennzeichnet, dass** der terminale Abschnitt jeder Lamelle (11) eine isolierende Verkleidung (26) mit einer größeren Länge als der Abschnitt aufweist, die imstande ist, entlang der Lamelle (11) über einen Abstand zu gleiten, der mindestens dem terminalen Abschnitt entspricht, um das freie Ende der Lamelle (11) freizulegen, das in seiner verbundenen Position über den Schlitten (5) hinausreicht, wobei ein Ring (27), der das Ende der distalen isolierenden Verkleidung (26) des freien Endes ausstattet, bewegt wird, damit die Verkleidung (26) den terminalen Abschnitt, wenn die Lamelle (11) freigelegt ist, durch eine Mauer (28) bedeckt, die über den Boden der Aussparung (21) der Sohle (16) hinausreicht und auf den Ring (27) einwirkt, wenn der Schlitten (5) in seine gelöste Position verlagert ist.

13. Stromverteilungsschiene für elektrische Leitungsschutzgeräte nach vorangehendem Anspruch, **dadurch gekennzeichnet, dass** die Stütze (31) der Lamelle (11) ein Relief aufweist, das einen harten Punkt (29), gefolgt von einem Endanschlag (30), bildet, zwischen denen sich der Ring (27) positioniert, wenn der Schlitten (5) am Ende des Wegs in Richtung seiner gelösten Position ist.

14. Stromverteilungsschiene für elektrische Leitungsschutzgeräte nach einem der vorangehenden Ansprüche, **dadurch gekennzeichnet, dass** der zentrale Teil jeder Sohle (16) eines Schlittens (5) auf seiner Fläche, die der Aussparung (21) gegenüberliegt, ein Profil (17) aufweist, das die Form einer Standardbefestigungsschiene von elektrischen Geräten mit zwei zur Sohle (16) lotrechten Wänden, auf denen zwei Kanten (24, 25) stehen, die sich nach außen in eine Richtung etwa parallel zur Sohle (16) erweitern, annimmt.

15. Stromverteilungsschiene für elektrische Leitungsschutzgeräte nach vorangehendem Anspruch, **dadurch gekennzeichnet, dass** der Abstand zwischen den Wänden des Profils (17) im Verhältnis zu Standardprofilen derart vergrößert ist, dass jeder Winkelausschlag der Geräte verhindert wird, wenn sie dort befestigt sind und derart, dass auf der Seite des Vorsprungs (15), wobei der Abstand zwischen den freien Enden (24, 25) der Kanten im Standardabstand verbleiben, die Überschreitung der Kante (24) im Verhältnis zur Wand reduziert und ihr Ende abgerundet ist, damit die Befestigung auf dem Profil (17) eines auf der Sohle der modularen elektrischen Geräte gegen Rückholmittel gleitenden Riegels die Demontage des modularen Geräts durch Schwenken desselben um das entgegengesetzte Ende (25) des Profils (17) erlaubt.

16. Stromverteilungsschiene für elektrische Leitungsschutzgeräte nach einem der vorangehenden Ansprüche, **dadurch gekennzeichnet, dass** die Enden jeder transversalen Verteilerschiene (9) gabelförmig sind.

17. Stromverteilungsschiene für elektrische Leitungsschutzgeräte nach einem der vorangehenden Ansprüche, **dadurch gekennzeichnet, dass** der Abstand zwischen den Enden der transversalen Schienen (9) und den Eingangsverbindern der auf den Schlitten (5) platzierten elektrischen Geräten in gelöster Position der Schlitten (5) größer als 4 mm ist.

## Claims

1. A power bus for electrical apparatuses for protecting lines positioned alongside each other in rows in a box or distribution cabinet of a household or industrial installation, comprising a distribution column conveying active conductors (7) including at least one phase of the network, which are distributed laterally on at least one side by transverse distribution strips (9), at least one end of which protrudes past the distribution column in a transverse direction perpendicular to the axis of the column, at a regular frequency in the direction of said axis, the apparatuses being individually fastened on at least one moving carriage (5) cooperating with a distribution strip (9) and sliding on a base (1) extending on each distribution side of the transverse strips (9), the sliding being done by translational guiding means in the transverse direction between two stable positions corresponding to a disconnected position and a connected position of the apparatus reflecting two relative positions of the carriage (5) and a transverse strip (9), respectively allowing the assembly/disassembly of an apparatus on at least one carriage (5) and the connection thereof to a number of transverse strips (9) corresponding to the number of carriages, **characterized in that** each carriage (5) comprises means for insulating the strip (9) and blocking the translation of the carriage (5) that are activated in the disconnected position and when there is no electrical apparatus on the carriage (5).

2. The power bus for electrical apparatuses for protecting lines according to the preceding claim, **characterized in that** a raised portion (2) of the base (1) constitutes the distribution column of the bus, which furthermore comprises:
- one or more axial bars (7) conveying the phase(s),
- the transverse distribution strips (9) distributing them laterally, and
- a cover (8) provided on at least one side with crenulated protuberances (19) for guiding the carriages (5) and from which the transverse strips (9) protrude.

3. The power bus for electrical apparatuses for protecting lines according to one of the preceding claims, **characterized in that** the carriages (5) are alongside each other and have a width, in the direction of the axis of the central column, equal to the distance between the median axes of two adjacent strips (9).

4. The power bus for electrical apparatuses for protecting lines according to the preceding claim, **characterized in that** the carriage (5) comprises, in an end projection (15) interposed between the apparatus and the steering column, at the height of the transverse strips (9), an opening (14) allowing the passage of one end of a strip (9), which is kept in the volume of the projection (15) in the disconnected position and protrudes past the opening (14) in the connected position, and means (12) for closing off said opening (14) which, when activated, prevent contact with said end in the disconnected position as well as the free sliding of the carriage (5) toward the connected position.

5. The power bus for electrical apparatuses for protecting lines according to the preceding claim, **characterized in that** squares are placed at the base of the end projection (15) between the latter and a base plate (16) of the carriage (5), at the side borders of said base plate (16).

6. The power bus for electrical apparatuses for protecting lines according to one of claims 4 and 5, **characterized in that** the means (12) for closing off the passage consist of a latch of the guillotine type movable in a direction perpendicular to the movement direction of the carriage (5), an actuating end of which protrudes past the carriage (5) when the latch (12) is in a stable idle position, said latch (12) being movable against return means and comprising a slot (20) placed aligned with the transverse strip (9) and the opening (14) in order to allow the passage of said strip (9) when the actuating end is actuated, said slot (20) being offset from the opening (14) and closing off the passage in the idle position.

7. The power bus for electrical apparatuses for protecting lines according to the preceding claim, **characterized in that** the actuating end comprises an orifice (21) for the passage of a lock.

8. The power bus for electrical apparatuses for protecting lines according to one of the preceding claims, **characterized in that** it comprises, on each existing distribution side by the transverse strips (9), a neutral bar fastened to the base (1) and comprising connecting fingers (11) oriented in the translation direction of the carriage (5), one finger (11) below each carriage, and with a length provided to make them accessible in the connected position of the carriages (5).

9. The power bus for electrical apparatuses for protecting lines according to the preceding claim, **characterized in that** each neutral bar is positioned in a groove (10) formed in the base (1) with an orientation parallel to the distribution column, at least one portion of the fingers (11) extending above and parallel to the base (1).

10. The power bus for electrical apparatuses for protecting lines according to one of the preceding claims, **characterized in that** each carriage (5) comprises a base plate (16) provided with at least one longitudinal recess (21) able to adjust on at least one raised portion (18) protruding from the base, which constitutes a rail for guiding the translation of said base plate (16).

11. The power bus for electrical apparatuses for protecting lines according to the preceding claim, **characterized in that** a finger (11) end portion of the neutral bar extending above the base (1) is housed between the bottom of the recess (21) of the base plate (16) on the one hand and a support (31) protruding from the base (1) on the other hand, said finger (11) end portion remaining under the base plate in the disconnected position and coming out of the base plate (16) in the connected position.

12. The power bus for electrical apparatuses for protecting lines according to the preceding claim, **characterized in that** said and portion of each finger (11) comprises an insulating coating (26) longer than said portion, able to slide along the finger (11) over a distance at least equal to said end portion in order to strip the free end of the finger (11) protruding from the carriage (5) in its connected position, a flange (27) equipping the distal end of the insulating coating (26) of said free end being driven so that the coating (26) covers the end portion when the finger (11) has been stripped, by a low wall (28) protruding past the bottom of the recess (21) of the base plate (16) and exerting action on the flange (27) when the carriage (5) is moved toward its disconnected position.

13. The power bus for electrical apparatuses for protecting lines according to the preceding claim, **characterized in that** the support (31) of the finger (11) comprises a raised portion forming a hard point (29) followed by an end stop (30), between which the flange (27) is positioned when the carriage (5) is at the end of the journey toward its disconnected position.

14. The power bus for electrical apparatuses for protecting lines according to one of the preceding claims, **characterized in that** the central part of each carriage (5) base plate (16), on its face opposite the recess (21), has a profile (17) copying the shape of a standardized rail for fastening electrical apparatuses, with two walls perpendicular to the base plate (16) topped by two rims (24, 25) flaring outwardly in a direction substantially parallel to said base plate (16).

15. The power bus for electrical apparatuses for protecting lines according to the preceding claims, **characterized in that** the distance between said walls of the profile (17) is increased relative to the standardized profiles so as to avoid any angular travel of the apparatuses when they are fastened and such that, on the projection side (15), the distance between the free ends (24, 25) of the rims remaining the standardized distance, the protrusion of the rim (24) relative to the wall is reduced and its end is rounded, so that the fastening on the profile (17) of a latch sliding on the base plate of the modular electrical apparatuses against return means makes it possible to disassemble the modular apparatus by pivoting the latter around the opposite end (25) of the profile (17).

16. The power bus for electrical apparatuses for protecting lines according to one of the preceding claims, **characterized in that** the ends of each transverse distribution strip (9) are in the form of a fork.

17. The power bus for electrical apparatuses for protecting lines according to one of the preceding claims, **characterized in that** the distance between the ends of the transverse strips (9) and the input connectors of the electrical apparatuses placed on the carriages (5) is greater than 4 mm in the disconnected position of the carriages (5).
